# EUROPÄISCHE PATENTSCHRIFT

(11) **EP 1 574 320 B1**
(45) Veröffentlichungstag und Bekanntmachung des Hinweises auf die Patenterteilung: **15.10.2008**
(21) Anmeldenummer: 04005981.8
(22) Anmeldetag: 12.03.2004
(51) Int. Cl.: B29C 53/60, B29C 53/80, B29C 70/30

(54) **Vorrichtung und Verfahren zum Aufwickeln von Fäden auf einen Formträger**
Apparatus and method for winding threads on a substrate
Dispositif et procédé pour enrouler des fils sur un substrat

(43) Veröffentlichungstag der Anmeldung: 14.09.2005
(73) Patentinhaber: EHA Spezialmaschinenbau GmbH, 35239 Steffenberg (DE)
(72) Erfinder: Weg, Johannes, 35685 Dillenburg (DE)
(74) Vertreter: Rohmann, Michael

(56) Entgegenhaltungen:
- US-A- 2 558 849
- US-A- 4 137 119

## Beschreibung

Die Erfindung betrifft eine Vorrichtung zum Aufwickeln einer Mehrzahl von Fäden auf einen Formträger. Fernerhin bezieht sich die Erfindung auf ein Verfahren zum Aufwickeln der Fäden auf den Formträger. Der Begriff Faden meint insbesondere zumindest eine Faser, vorzugsweise zwei oder mehr Fasern, die gemeinsam zugeführt bzw. aufgewickelt werden.

Eine Vorrichtung der vorstehend genannten Art ist aus US-A-4 137 119 bekannt. Es handelt sich dabei um eine Vorrichtung zum Umwickeln von Kunststoffmasten mit Verstärkungsfasern. Zum Aufbringen der Verstärkungsfasern ist eine Mehrzahl von Übergabeelementen vorgesehen. Die Verstärkungsfasern werden zunächst parallel zur Längsachse auf einen Mast aufgebracht. Danach wird der Mast mit ungefähr helikal ausgerichteten und ungefähr senkrecht zur Längsachse des Mastes orientierten Fasern umwickelt. Bei dieser Vorrichtung werden die Masten kontinuierlich durch die Vorrichtung gefördert. Der Abstand der Übergabeelemente zu den Masten ist bei dieser Vorrichtung einstellbar. Das Aufwickeln der Verstärkungsfasern mit dieser bekannten Vorrichtung ist allerdings aufwendig und kann zu Zwängen bzw. Fehlern führen.

Aus der Praxis ist es im Übrigen grundsätzlich bekannt, Fäden bzw. Faserstränge auf einem Formträger aufzuwickeln. Die Fäden bzw. Faserstränge können vorher mit einem Harz imprägniert werden und anschließend wird der imprägnierte Faserstrang auf dem Formträger aufgewickelt. Bei dem Formträger handelt es sich insbesondere um einen zylinderförmigen Hohlkörper, beispielsweise um einen blasgeformten Kunststoffbehälter. Das resultierende Endprodukt kann beispielsweise als Tank für Flüssigkeiten oder Gase oder dergleichen eingesetzt werden. Grundsätzlich ist es aus der Praxis auch bekannt einem Formträger aus einer Mehrzahl von unterschiedlichen Zuführungsrichtungen jeweils zumindest einen Faden zuzuführen. Diese Zuführung der Fäden aus unterschiedlichen Richtungen erfolgt mit einem sogenannten Ringverlegeauge. Das Ringverlegeauge weist eine Mehrzahl von Übergabeelementen auf, die um den Formträger herum verteilt sind. Von einem Übergabeelement läuft im Betrieb der Vorrichtung zumindest ein Faden auf den Formträger auf. Der Faden kann dabei beispielsweise tangential an den Formträger herangeführt werden. Die aus der Praxis bekannten Vorrichtungen haben den Nachteil, dass die mit ihnen zu realisierende Arbeitsweise wenig flexibel und wenig variabel ist.

Demgegenüber liegt der Erfindung das technische Problem zu Grunde, eine Vorrichtung der eingangs genannten Art anzugeben, mit der eine sehr flexible und variable Arbeitsweise bei hoher Funktionssicherheit und Anwickelpräzision möglich ist. Der Erfindung liegt weiterhin das technische Problem zu Grunde, ein entsprechendes Verfahren anzugeben.

Zur Lösung des technischen Problems lehrt die Erfindung eine Vorrichtung zum Aufwickeln einer Mehrzahl von Fäden auf einen Formträger,
wobei zumindest ein Ringverlegeauge vorgesehen ist, das den Formträger zumindest teilweise umgibt, mit welchem Ringverlegeauge dem Formträger aus einer Mehrzahl von unterschiedlichen Zuführungsrichtungen jeweils zumindest ein Faden zuführbar ist,
wobei der Formträger (2) während des Wickelvorganges rotierend angetrieben ist,
wobei jeder Zuführungsrichtung zumindest ein Übergabeelement zugeordnet ist, von dem aus der zumindest eine Faden auf den Formträger aufläuft
und wobei zumindest für einen Teil der Übergabeelemente der Abstand zur Formträgerachse bzw. zum Formträger mit einer einzigen Einstellvorrichtung synchron einstellbar ist.

Wie oben bereits dargelegt meint der Begriff Faden im Rahmen der Erfindung insbesondere zumindest eine Faser bzw. zwei oder mehr Fasern. Von einem Übergabeelement läuft die zumindest eine Faser, vorzugsweise zwei oder mehr Fasern auf den Formträger auf. Bei den Fasern kann es sich beispielsweise um Glasfasern, Kohlefasern, Aramidfasern oder auch um Kunststofffasern handeln.

Der Formträger kann einerseits ein sogenannter Liner sein, das heißt ein Formträger, der im Produkt verbleibt bzw. Bestandteil des Produktes wird. Bei dem Formträger kann es sich andererseits aber auch um einen Dorn handeln, der nach einem Wickelvorgang aus dem Produkt herausgezogen wird und für weitere Wickelvorgänge wieder zur Verfügung steht.

Das Ringverlegeauge weist zweckmäßigerweise eine Öffnung für den Formträger auf. Das heißt, die Formträgerachse durchgreift eine zentrale Öffnung des Ringverlegeauges. - Aus verschiedenen Zuführungsrichtungen wird mit dem Ringverlegeauge jeweils zumindest ein Faden bzw. zumindest eine Faser, vorzugsweise zwei oder mehr Fasern zugeführt. So kann es beispielsweise acht Zuführungsrichtungen geben und aus jeder dieser Zuführungsrichtungen werden eine oder mehrere Fasern zugeführt. Jeder dieser Zuführungsrichtungen ist ein Übergabeelement zugeordnet. Am Übergabeelement haben die zugeführten Fasern/Fäden den letzten Kontakt mit dem Ringverlegeauge und laufen dann auf den Formträger auf. Für das Übergabeelement gibt es verschiedene Ausgestaltungsmöglichkeiten. Im einfachsten Fall kann das Übergabeelement ein Umlenkbolzen, eine Umlenkstange oder eine Rolle oder dergleichen sein. Nach einer bevorzugten Ausführungsform der Erfindung ist ein Übergabeelement als Fadenauge ausgebildet. Dabei handelt es sich um ein ringförmiges Element mit vorzugsweise kreisförmigem Querschnitt. Der Faden wird durch die Ringöffnung des Fadenauges dem Formträger zugeführt. Zweckmäßigerweise ist ein Fadenauge am Ende eines Übergabearmes bzw. Übergabehebels vorgesehen. - Die Übergabeelemente sind bezüglich des Umfangs des Formträgers um den Formträger herum mit Abstand zum Formträger angeordnet.

Es liegt im Rahmen der Erfindung, dass zumindest ein Teil der Übergabeelemente mit gleichem Abstand zur Formträgerachse angeordnet ist. Nach besonders bevorzugter Ausführungsform der Erfindung sind alle Übergabeelemente mit gleichem Abstand zur Formträgerachse angeordnet.

Erfindungsgemäß ist für zumindest einen Teil der Übergabeelemente der Abstand zur Formträgerachse mit einer einzigen Einstellvorrichtung gemeinsam bzw. gleichzeitig bzw. synchron einstellbar. Die Zustellbewegung der Übergabeelemente bezüglich des Formträgers erfolgt zweckmäßigerweise linear, insbesondere radial oder tangential zum Formträger. Die Zustellbewegung der Übergabeelemente relativ zum Formträger kann aber auch über einen bogenförmigen Weg erfolgen. Vorzugsweise ist für alle Übergabeelemente des Ringverlegeauges der Abstand zur Formträgerachse gemeinsam bzw. gleichzeitig bzw. synchron einstellbar. Grundsätzlich liegt es aber auch im Rahmen der Erfindung, dass für einen Teil der Übergabeelemente die Abstände zur Formträgerachse unabhängig voneinander eingestellt werden können.

Nach besonders bevorzugter Ausführungsform der Erfindung sind die gemeinsam bzw. synchron einstellbaren Übergabeelemente stets mit gleichem Abstand zur Formträgerachse angeordnet. Die Übergabeelemente sind zweckmäßigerweise auf einem Kreis um den Formträger bzw. um die Formträgerachse angeordnet.

Nach einer Ausführungsform der Erfindung ist die Fadenführung der Übergabeelemente bogenförmig oder ringsegmentförmig ausgebildet. Die Fäden bzw. die Fasern laufen dann über eine gekrümmte Führungsfläche des Übergabeelementes. Nach einer anderen Ausführungsform ist ein Übergabeelement als Fadenauge ausgebildet. Dann laufen die Fasern bzw. Fäden durch die Öffnung des Fadenauges, die beispielsweise kreisförmig ausgeführt ist.

Nach einer Ausführungsform der Erfindung ist die Einstellvorrichtung mit der Maßgabe ausgelegt, dass der Abstand der Übergabeelemente von der Formträgerachse irisblendenartig einstellbar ist. Beispielsweise arbeitet man zur Einstellung der Abstände der Übergabeelemente mit einer Kurvenscheibe, was in der Figurenbeschreibung noch näher erläutert wird.

Nach sehr bevorzugter Ausführungsform der Erfindung kann für den Antrieb der Einstellvorrichtung ein geeigneter Motor eingesetzt werden, insbesondere ein Servomotor oder Schrittmotor. Der Antrieb bzw. die Betätigung der Einstellvorrichtung für die Einstellung des Abstandes der Übergabeelemente kann aber auch pneumatisch bzw. servopneumatisch oder hydraulisch bzw. servöhydraulisch erfolgen.

Für eine gemeinsame Einstellung der Abstände der Übergabeelemente kann beispielsweise ein Zahnkranz mit darin kämmenden Zahnrädern eingesetzt werden oder ein Kegelradkranz mit zugeordneten Kegelrädern. Die Einstellung der Abstände der Übergabeelemente kann auch über einen Hebelmechanismus erfolgen. Zur Abstandseinstellung der Übergabeelemente kann fernerhin auch beispielsweise eine Planspirale eingesetzt werden. Zur Verwirklichung der Einstellung der Übergabeelementabstände ist fernerhin der Einsatz von Ritzeln möglich, die mit einem Zahnriemen oder mit einem Stirnradkranz kämmen. Die Einstellung der Abstände der Übergabeelemente kann weiterhin auch mit Hilfe eines Keilstangenmechanismus erfolgen.

Gegenstand der Erfindung ist außerdem ein Verfahren zum Aufwickeln einer Mehrzahl von Fäden auf einen Formträger, wobei der Formträger während des Wickelvorganges rotierend angetrieben wird, wobei dem Formträger aus einer Mehrzahl von unterschiedlichen Zuführungsrichtungen von den Zuführungsrichtungen zugeordneten Übergabeelementen jeweils zumindest ein Faden zugeführt wird und wobei für zumindest einen Teil der Übergabeelemente der Abstand zur Formträgerachse mit einer einzigen Einstellvorrichtung synchron eingestellt wird. Nach besonders bevorzugter Ausführungsform des erfindungsgemäßen Verfahrens wird für alle Übergabeelemente der Abstand gleichzeitig bzw. synchron eingestellt.

Der Erfindung liegt die Erkenntnis zu Grunde, dass mit Hilfe der erfindungsgemäßen Abstandseinstellung der Übergabeelemente eine sehr flexible und variable und zugleich funktionssichere Arbeitsweise möglich ist. Es lassen sich vor allem kürzere Verfahrwege bei der Bewicklung verwirklichen. Durch die flexible Einstellung der Abstände lässt sich stets eine hohe Arbeitsgeschwindigkeit und somit eine hohe Produktivität verwirklichen. Nichtsdestoweniger wird im Vergleich zu den aus dem Stand der Technik bekannten Maßnahmen eine präzisere Fadenablage erreicht. Die mit dem erfindungsgemäßen Verfahren hergestellten Produkte zeichnen sich deshalb durch eine einwandfreie Qualität aus. Zu betonen ist weiterhin, dass die erfindungsgemäße Vorrichtung wenig aufwändig und wenig komplex aufgebaut ist und somit auch einfach herstellbar ist.

Nachfolgend wird die Erfindung anhand einer lediglich ein Ausführungsbeispiel darstellenden Zeichnung näher erläutert. Es zeigen in schematischer Darstellung:

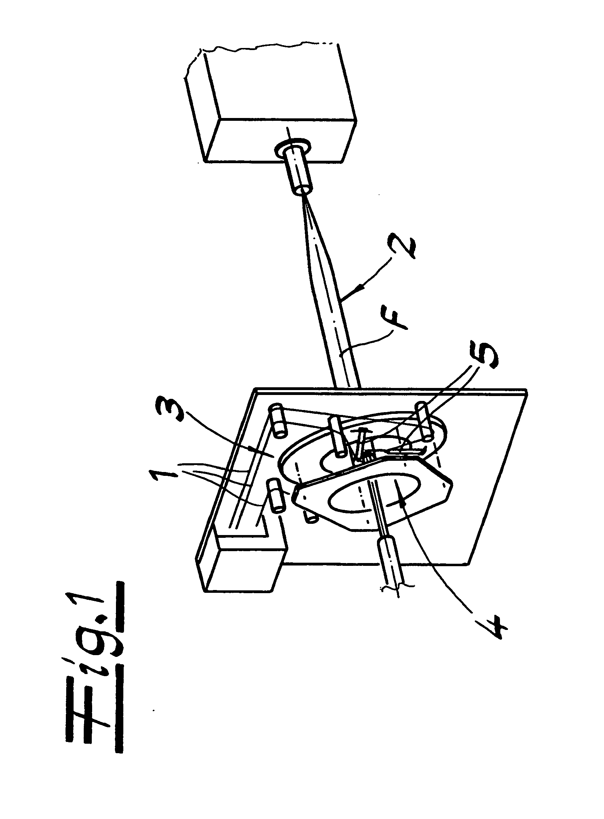

- Fig. 1: eine perspektivische Ansicht einer erfindungsgemäßen Vorrichtung,
- Fig. 2: eine Draufsicht auf ein erfindungsgemäßes Ringverlegeauge in einer ersten Ausführungsform,

- Fig. 3: den Gegenstand gemäß Fig. 2 in einer zweiten Ausführungsform,
- Fig. 4: den Gegenstand nach Fig. 2 in einer dritten Ausführungsform,
- Fig. 5: den Gegenstand gemäß Fig. 2 in einer vierten Ausführungsform,
- Fig. 6: den Gegenstand nach Fig. 2 in einer fünften Ausführungsform,
- Fig.7: ein erfindungsgemäßes Ringverlegeauge in einer sechsten Ausführungsform und
- Fig. 8: eine Prinzipskizze für eine erfindungsgemäße Abstandseinstellung.

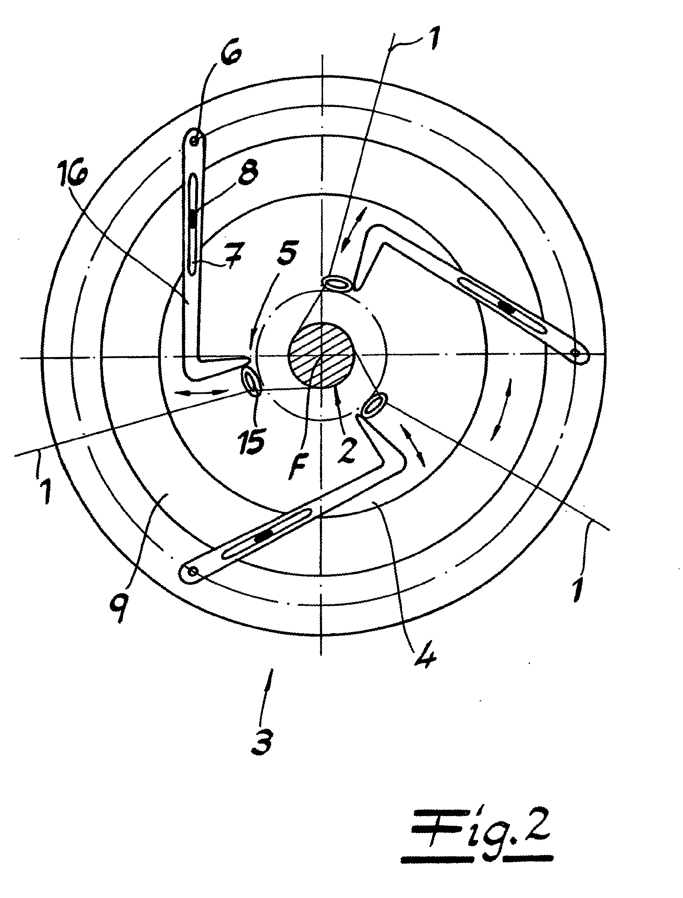

Die Figuren betreffen eine Vorrichtung zum Aufwickeln von Fasern 1 auf einen Formträger 2. Im Ausführungsbeispiel nach den Figuren ist ein Ringverlegeauge 3 vorgesehen, das den Formträger 2 vollständig umgibt. Mit anderen Worten durchgreift der Formträger 2 bzw. seine Formträgerachse F eine Öffnung 4 des Ringverlegeauges 3. Mit dem Ringverlegeauge 3 sind dem Formträger 2 aus einer Mehrzahl von unterschiedlichen Zuführungsrichtungen Fasern 1 zuführbar. Aus einer Zuführungsrichtung sind zweckmäßigerweise zwei oder mehr Fasern 1 zuführbar. Jeder Zuführungsrichtung ist ein Übergabeelement 5 zugeordnet, von dem aus die Fasern 1 auf den Formträger 2 auflaufen. Mit anderen Worten findet an dem Übergabeelement 5 der letzte Kontakt der Fasern mit dem Ringverlegeauge 3 statt, bevor die Fasern 1 auf den Formträger 2 auflaufen. Erfindungsgemäß ist zumindest für einen Teil, vorzugsweise für alle Übergabeelemente 5 der Abstand a zum Formträger 2 bzw. zur Formträgerachse F einstellbar. Die Fig. 2 bis 7 zeigen dazu verschiedene Einstellungsmöglichkeiten bzw. verschiedene Einstellvorrichtungen. Erfindungsgemäß wird der Abstand a aller Übergabeelemente 5 zur Formträgerachse F gemeinsam bzw. synchron eingestellt. Abstand a eines Übergabeelementes 5 meint vorstehend und nachfolgend insbesondere den Abstand a des letzten Kontaktpunktes einer Faser 1 am Übergabeelement 5 von der Formträgerachse F.

In der Fig. 2 ist ein Ringverlegeauge 3 mit drei Übergabeelementen 5 dargestellt. Die Fasern 1 werden hier also von drei Zuführungsrichtungen dem Formträger 2 zugeführt. Die Übergabeelemente 5 sind hier als Fadenaugen 15 ausgebildet, die an als Hebelelemente funktionierende Übergabearme 16 angeschlossen sind. Diese Übergabearme 16 sind jeweils um eine Schwenkachse 6 schwenkbar. Im Übrigen weist jeder Übergabearm 16 ein Langloch 7 auf, in das ein an einem Antriebsring 9 fixierter Bolzen 8 eingreift. Beim Drehen des Antriebsringes 9 werden die Übergabearme 16 in Richtung der Doppelpfeile verschwenkt und auf diese Weise wird der Abstand a der Fadenaugen 15 zur Formträgerachse F verändert. Bei dieser Ausführungsform wird der Abstand a für alle Übergabeelemente 5 bzw. Fadenaugen 15 gleichzeitig bzw. synchron eingestellt und stets haben alle Übergabeelemente 5 den gleichen Abstand a zur Formträgerachse F.

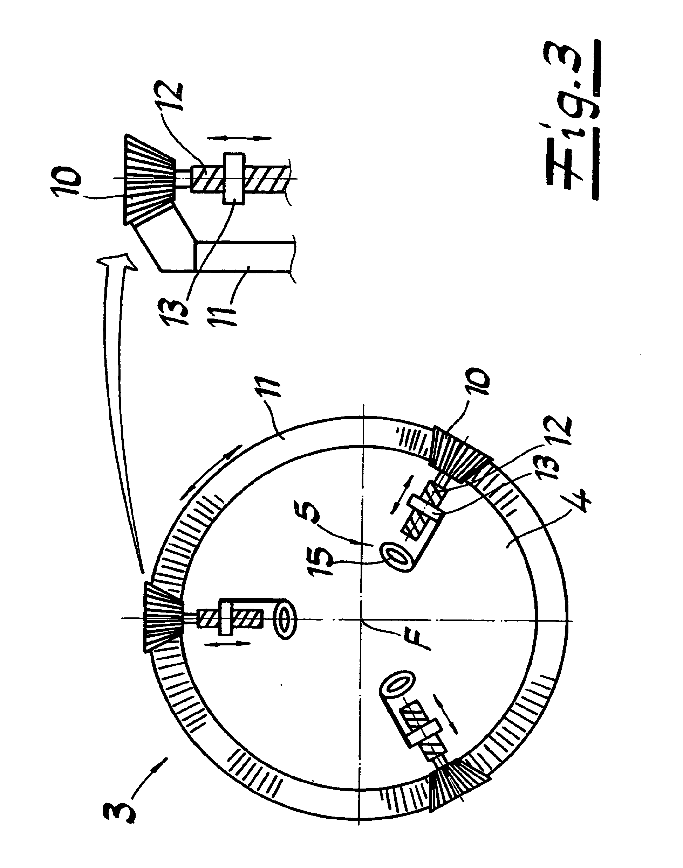

Die Ausführungsform gemäß Fig. 3 arbeitet zur Einstellung des Abstandes a mit einem Kegelradmechanismus. Jedem Übergabeelement 5 ist hier ein Kegelrad 10 zugeordnet, das mit einem Kegelradkranz 11 kämmt. Bei Drehung des Kegelradkranzes 11 rotiert auch das Kegelrad 10 und die daran angeschlossene Spindel 12 bzw. Schraube. Eine auf das Außengewinde der Spindel 12 aufgesetzte Mutter 13 verschiebt sich auf der Spindel 12, wenn Kegelrad 10 und Spindel 12 rotieren. Dadurch wird der Abstand des Übergabeelementes 5 von der Formträgerachse F verändert. Die Übergabeelemente 5 sind hier ebenfalls als Fadenaugen 15 ausgebildet, die jeweils an eine Mutter 13 angeschlossen sind. Auch bei dieser Ausführungsform werden die Abstände a für alle Übergabeelemente 5 gleichzeitig bzw. synchron verändert und alle Übergabeelemente 5 weisen stets den gleichen Abstand a zur Formträgerachse F auf.

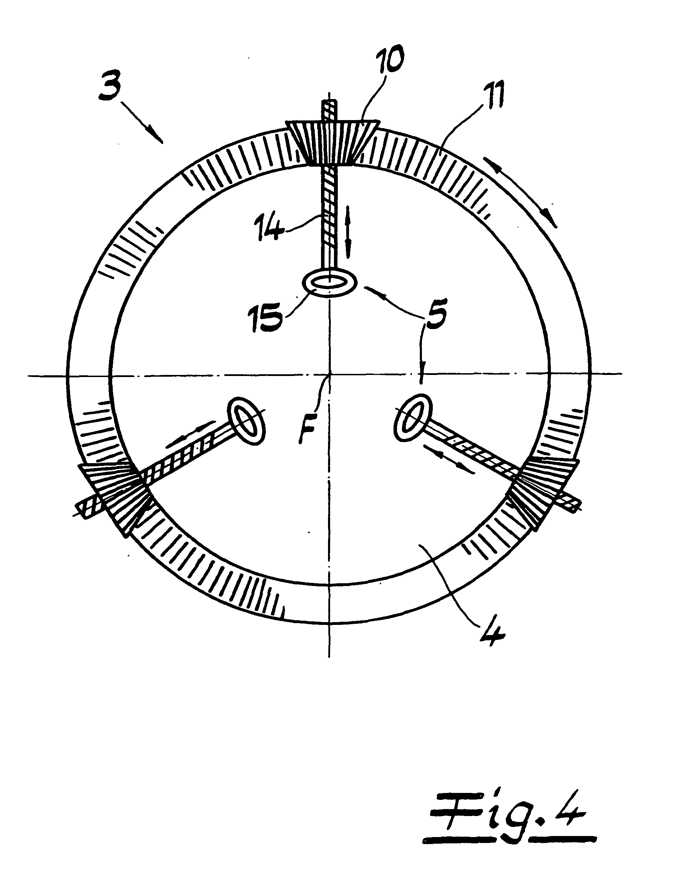

Die Ausführungsform nach Fig. 4 arbeitet ebenfalls mit einem Kegelradmechanismus. Jedem Übergabeelement 5 ist auch hier ein Kegelrad 10 zugeordnet, das mit einem Kegelradkranz 11 kämmt. Bei Drehung des Kegelradkranzes 11 rotiert auch jedes Kegelrad 10 und dadurch wird eine in das Kegelrad 10 eingreifende Verstellschraube 14 verschoben. Dazu wechselwirkt das Außengewinde jeder Verstellschraube 14 mit einem Innengewinde des zugeordneten Kegelrades 10. An jede Verstellschraube 14 schließt ein als Fadenauge 15 ausgebildetes Übergabeelement 5 an. Die Fasern 1 werden auch hier durch die Öffnungen der Fadenaugen 15 dem Formträger 2 zugeführt. Bei dieser Ausführungsform werden die Abstände a der Übergabeelemente 5 bzw. Fadenaugen 15 gleichzeitig bzw. synchron verstellt und alle Übergabeelemente 5 bzw. Fadenaugen 15 haben stets den gleichen Abstand a zur Formträgerachse F.

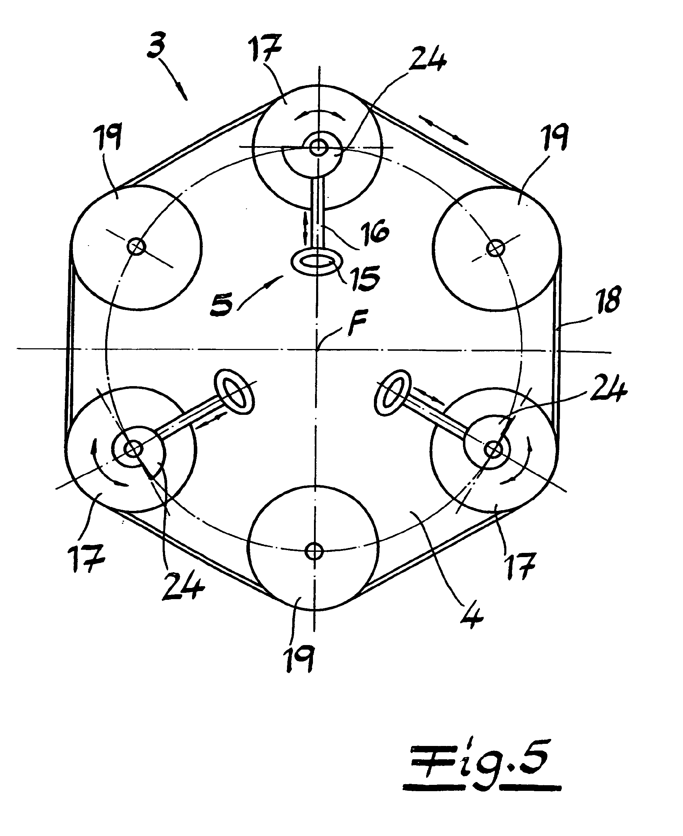

Auch in der Fig. 5 sind die Übergabeelemente 5 als Fadenaugen 15 ausgebildet, die jeweils an einen Übergabearm 16 angeschlossen sind. Bei einer Drehung eines Ritzels 17 mit Exzenterscheibe 24 wirkt ein Nocken auf den Übergabearm 16 ein, so dass dieser in Richtung des Doppelpfeiles verschoben werden kann. Die Ritzel 17 werden zweckmäßigerweise mit Hilfe eines umlaufenden Zugmittels, beispielsweise mit Hilfe eines Zahnriemens 18 oder einer Kette angetrieben. Der Zahnriemen 18 wird im Ausführungsbeispiel nach Fig. 5 außerdem über Umlenkrollen 19 geführt, von denen jeweils eine Umlenkrolle 19 den Zahnriemen 18 zweckmäßigerweise antreibt.

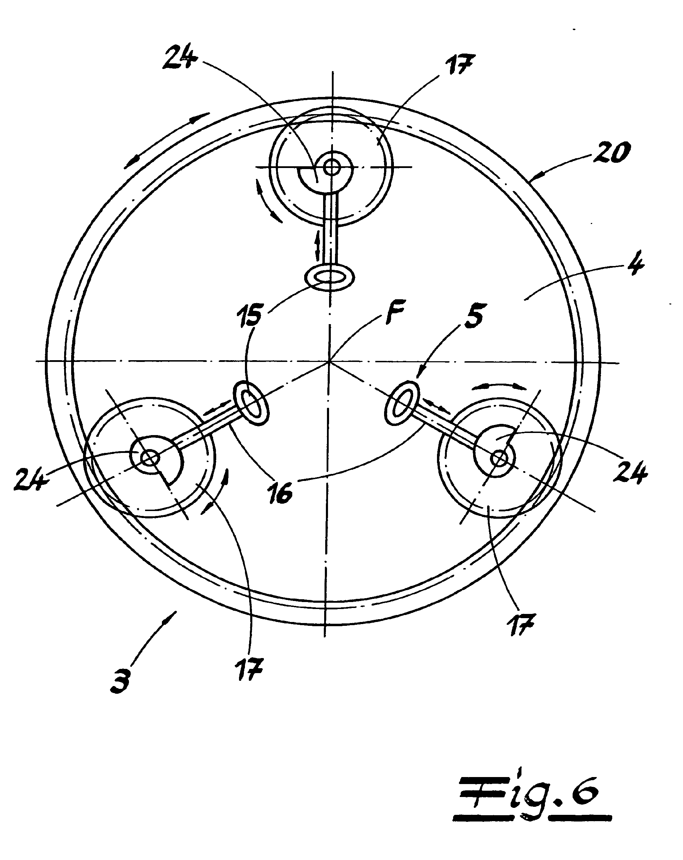

Fig. 6 zeigt eine ähnliche Ausführungsform wie die Fig. 5. Hier kämmen die Ritzel 17 aber mit einem Stirnradkranz 20. Bei einer Rotation des Stirnradkranzes 20 werden also die Übergabearme 16 mit ihren angeschlossenen Fadenaugen 15 in Richtung des Doppelpfeiles bewegt. - Auch bei den Ausführungsformen nach den Fig. 5 und 6 wird der Abstand a der Übergabeelemente 5 bzw. der Fadenaugen 15 zur Formträgerachse F gleichzeitig bzw. synchron eingestellt und alle Übergabeelemente 5 bzw. Fadenaugen 15 haben in einer bestimmten eingestellten Funktionsstellung stets den gleichen Abstand a zur Formträgerachse F.

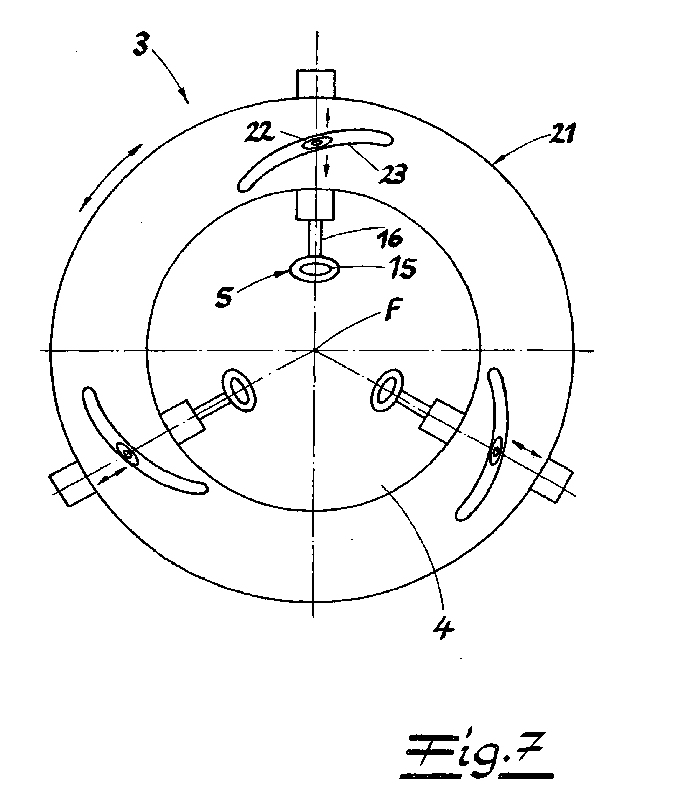

Die Ausführungsform gemäß Fig. 7 arbeitet mit einer Kurvenscheibe 21. An die als Fadenaugen 15 ausgebildeten Übergabeelemente 5 ist jeweils ein Übergabearm 16 angeschlossen, an dem sich ein Eingriffselement 22, beispielsweise ein entsprechender Bolzen befindet. Das Eingriffselement 22 greift in ein gebogenes bzw. kurvenförmiges Langloch 23 ein. Bei Drehung der Kurvenscheibe 21 werden auf diese Weise die Übergabearme 16 in Richtung des Doppelpfeiles verschoben und auf diese Weise wird der Abstand a der Fadenaugen 15 zur Formträgerachse F gleichzeitig bzw. synchron verändert.

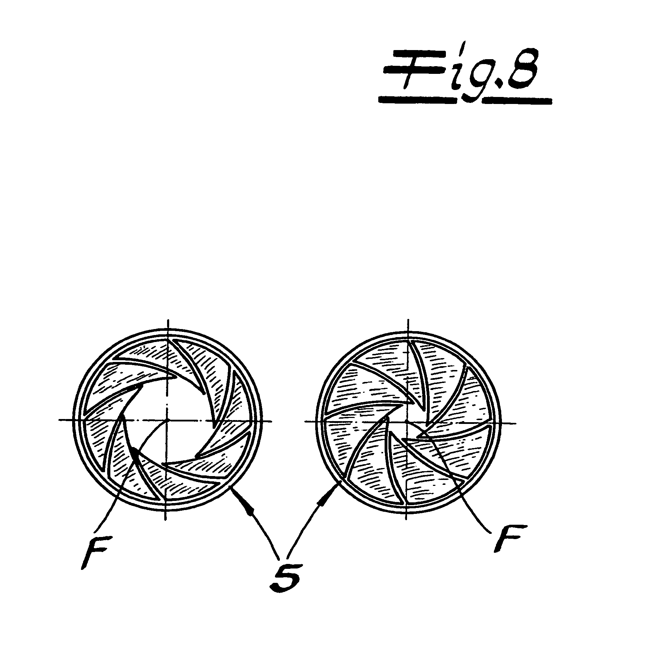

Ein zu der Ausführungsform gemäß Fig. 7 analoges Verfahren zur Einstellung des Abstandes a ist in der Fig. 8 ganz schematisch angedeutet worden. Bei der Ausführungsform gemäß Fig. 8 wird der Abstand a der Übergabeelemente 5 irisblendenartig verändert bzw. eingestellt.

Es ist noch zu erwähnen, dass nach Beendigung des Wickelprozesses der Formträger 2 bzw. der Dorn axial durch das Ringverlegeauge 3 hindurch entnommen werden kann. Nach einer anderen Ausführungsform kann der Formträger 2 aber auch radial durch entsprechende Öffnungen im Ringverlegeauge 3 entnommen werden.

## Patentansprüche

1. Vorrichtung zum Aufwickeln einer Mehrzahl von Fäden bzw. Fasern (1) auf einen Formträger (2),
wobei zumindest ein Ringverlegeauge (3) vorgesehen ist, das den Formträger (2) zumindest teilweise umgibt, mit welchem Ringverlegeauge (3) dem Formträger (2) aus einer Mehrzahl von unterschiedlichen Zuführungsrichtungen jeweils zumindest ein Faden zuführbar ist,
wobei der Formträger (2) während des Wickelvorganges rotierend angetrieben ist,
wobei jeder Zuführungsrichtung zumindest ein Übergabeelement (5) zugeordnet ist, von dem aus der zumindest eine Faden auf den Formträger (2) aufläuft
und wobei zumindest für einen Teil der Übergabeelemente (5) der Abstand (a) zur Formträgerachse (F) mit einer einzigen Einstellvorrichtung synchron einstellbar ist.

2. Vorrichtung nach Anspruch 1, wobei zumindest ein Teil der Übergabeelemente (5) mit gleichem Abstand zur Formträgerachse (F) angeordnet ist.

3. Vorrichtung nach einem der Ansprüche 1 oder 2, wobei die gemeinsam einstellbaren Übergabeelemente (5) stets mit gleichem Abstand (a) zur Formträgerachse (F) angeordnet sind.

4. Vorrichtung nach einem der Ansprüche 1 bis 3, wobei die Fadenführung der Übergabeelemente (5) bogenförmig oder ringsegmentförmig ausgebildet ist.

5. Vorrichtung nach einem der Ansprüche 1 bis 4, wobei ein Übergabeelement (5) als Fadenauge (15) ausgebildet ist.

6. Vorrichtung nach einem der Ansprüche 1 bis 5, wobei die Einstellvorrichtung mit der Maßgabe ausgelegt ist, dass der Abstand (a) der Übergabeelemente (5) von der Formträgerachse (F) irisblendenartig einstellbar ist.

7. Verfahren zum Aufwickeln einer Mehrzahl von Fäden auf einen Formträger (2),
wobei der Formträger (2) während des Wickelvorganges rotierend angetrieben wird,
wobei dem Formträger (2) aus einer Mehrzahl von unterschiedlichen Zuführungsrichtungen von den Zuführungsrichtungen zugeordneten Übergabeelementen (5) jeweils zumindest ein Faden zugeführt wird
und wobei für zumindest einen Teil der Übergabeelemente (5) der Abstand (a) zur Formträgerachse (F) mit einer einzigen Einstellvorrichtung synchron eingestellt wird.

## Claims

1. Apparatus for winding a multiplicity of threads or fibres (1) onto a mould carrier (2),
wherein at least one annular laying eye (3) is provided, which at least partially surrounds the mould carrier (2) and with which annular laying eye (3) in each case at least one thread can be fed to the mould carrier (2) from a multiplicity of different feed directions,
wherein the mould carrier (2) is driven in a rotating manner during the winding operation,
wherein each feed direction is assigned at least one transfer element (5), from which the at least one thread accumulates on the mould carrier (2)
and wherein at least for some of the transfer elements (5) the distance (a) from the mould carrier axis (F) can be adjusted synchronously with a single adjustment apparatus.

2. Apparatus according to Claim 1, wherein at least some of the transfer elements (5) are arranged at the same distance from the mould carrier axis (F).

3. Apparatus according to one of Claims 1 or 2, wherein the jointly adjustable transfer elements (5) are arranged always at the same distance (a) from the mould carrier axis (F).

4. Apparatus according to one of Claims 1 to 3, wherein the thread guide of the transfer elements (5) is configured to be bow-shaped or arc-shaped.

5. Apparatus according to one of Claims 1 to 4, wherein a transfer element (5) is configured as a thread eye (15).

6. Apparatus according to one of Claims 1 to 5, wherein the adjustment apparatus is designed with the proviso that the distance (a) of the transfer elements (5) from the mould carrier axis (F) can be adjusted in an iris-like manner.

7. Method for winding a multiplicity of threads onto a mould carrier (2),
wherein the mould carrier (2) is driven in a rotating manner during the winding operation,
wherein in each case at least one thread is fed to the mould carrier (2) from a multiplicity of different feed directions from transfer elements (5) assigned to the feed directions
and wherein for at least some of the transfer elements (5) the distance (a) from the mould carrier axis (F) is adjusted synchronously with a single adjustment apparatus.

## Revendications

1. Dispositif d'enroulement d'une pluralité de fils, respectivement fibres (1) sur un porte-moule (2),
dans lequel au moins un oeillet de placement annulaire (3) est prévu, lequel entoure au moins partiellement le porte-moule (2), au moyen duquel oeillet de placement annulaire (3) au moins un fil peut être respectivement introduit dans le porte-moule (2) dans une pluralité de directions d'introduction différentes,
dans lequel le porte-moule (2) est entraîné en rotation pendant le processus d'enroulement,
dans lequel au moins un élément de transfert (5) est associé à chaque direction d'introduction, à partir duquel au moins un des fils passe sur le porte-moule (2)
et dans lequel au moins pour une partie des éléments de transfert (5), la distance (a) par rapport à l'axe de porte-moule (F) peut être réglée de manière synchrone au moyen d'un dispositif de réglage unique.

2. Dispositif selon la revendication 1, dans lequel au moins une partie des éléments de transfert (5) est disposée à la même distance par rapport à l'axe de porte-moule (F).

3. Dispositif selon une des revendications 1 ou 2, dans lequel les éléments de transfert (5) réglables conjointement sont constamment disposés à la même distance (a) par rapport à l'axe de porte-moule (F).

4. Dispositif selon une des revendications 1 à 3, dans lequel le guidage de fils des éléments de transfert (5) est configuré en forme d'arc ou en forme de segment annulaire.

5. Dispositif selon une des revendications 1 à 4, dans lequel un élément de transfert (5) est configuré comme un oeillet de fil (15).

6. Dispositif selon une des revendications 1 à 5, dans lequel le dispositif de réglage est conçu avec pour caractéristique que la distance (a) des éléments de transfert (5) par rapport à l'axe de porte-moule (F) peut être réglée selon un réglage de type diaphragme à iris.

7. Procédé d'enroulement d'une pluralité de fils sur un porte-moule (2),
dans lequel le porte-moule (2) est entraîné en rotation pendant le processus d'enroulement,
dans lequel au moins un élément de transfert (5) est associé à chaque direction d'introduction, à partir duquel au moins un des fils passe sur le porte-moule (2)
et dans lequel au moins pour une partie des éléments de transfert (5) la distance (a) par rapport à l'axe de porte-moule (F) peut être réglée de manière synchrone au moyen d'un dispositif de réglage unique.
